# EUROPÄISCHE PATENTSCHRIFT

(11) **EP 3 244 383 B1**
(45) Veröffentlichungstag und Bekanntmachung des Hinweises auf die Patenterteilung: **22.06.2022**
(21) Anmeldenummer: 17170820.9
(22) Anmeldetag: 12.05.2017
(51) Int. Cl.: G09B 19/00, A63B 22/02, A63B 24/00

(54) **EINRICHTUNG UND VERFAHREN ZUM TRAINING EINER BALLSPORTART**
DEVICE AND METHOD FOR TRAINING A BALL GAME
DISPOSITIF ET PROCÉDÉ D'ENTRAÎNEMENT À UN SPORT DE BALLES

(30) Priorität: 13.05.2016 DE 102016108981; 13.05.2016 DE 102016108982
(43) Veröffentlichungstag der Anmeldung: 15.11.2017
(73) Patentinhaber: Umbrella Software Development GmbH, 04109 Leipzig (DE)
(72) Erfinder: HELD, Daniel, 04105 Leipzig (DE); REINHOLD, Clemens, 04107 Leipzig (DE); BUNSEN, Raimo, 04155 Leipzig (DE); SKAWRONEK, Oliver, 04277 Leipzig (DE)
(74) Vertreter: Hecht, Jan-David

(56) Entgegenhaltungen:
- WO-A1-2012/162505
- WO-A1-2016/119955
- DE-A1-102011 050 533
- GB-A- 2 293 772
- US-A1- 2013 004 928
- US-A1- 2014 080 638

## Beschreibung

Die vorliegende Erfindung betrifft eine Einrichtung und ein Verfahren zum Training einer Ballsportart.

Es sind zahlreiche Ballsportarten bekannt, bei denen ein oder mehrere Spieler (Benutzer) mit ein oder mehreren Bällen nach vorgegebenen Regeln spielen, um bestimmte Spielziele zu erreichen.

Fußball nimmt ein sehr großes öffentliches und finanzielles Interesse ein, jedoch gibt es auch weitere bekannte Ballsportarten, wie Handball, Tennis, (Eis-)Hockey und dgl., die sich großer Beliebtheit erfreuen.

Trainings für diese Ballsportarten finden zumeist direkt durch Spiele oder durch ein Trainer begleitetes Durchspielen bestimmter Spielsituationen und Spielzüge statt. Es ist auch schon der Einsatz von Medientechnik dahingehend bekannt, dass solche Spiele, Spielsituationen und Spielzüge mittels ein oder mehrerer Videokameras aufgezeichnet und zu einem späteren Zeitpunkt durch den Trainer zusammen mit dem Spieler analysiert werden, um Anhaltspunkte für eine Verbesserung des Spiels des Spielers zu geben.

Aufgabe der vorliegenden Erfindung ist es, neue Trainingsmethoden bereit zu stellen. Insbesondere soll das Training so verbessert werden, dass der Spieler eine unmittelbare Rückmeldung über seine Spielweise erhält. Dabei werden ähnliche Situationen in sehr kurzer Zeit intensiv wiederholt.

Diese Aufgabe wird gelöst durch die erfindungsgemäße Einrichtung zum Training einer Ballsportart nach Anspruch 1 und dem erfindungsgemäßen Verfahren zum Training einer Ballsportart nach Anspruch 13. Vorteilhafte Weiterbildungen sind in den Unteransprüchen und der nachfolgenden Beschreibung angegeben. "Ballsportarten" im Rahmen der vorliegenden Erfindung sind alle Sportarten, bei denen ein oder mehrere Bälle zum Einsatz kommen und von einem oder mehreren Spielern gespielt werden, sei es direkt mit einem Körperteil des Benutzers, beispielsweise Hand oder Fuß, oder auch mit einem bestimmten Spielgerät, beispielsweise einem Schläger. Solche Ballsportarten sind beispielsweise Fußball, Handball, Volleyball, Basketball, Tennis, Golf und dgl.

Die Erfinder haben erkannt, dass die gestellte Aufgabe dadurch besonders einfach gelöst werden kann, wenn neben einer Bildaufzeichnung zugleich eine Bildprojektion erfolgt, um Trainingsinhalte vorzugeben, wobei die Bildaufzeichnung der Überprüfung dient, wie der Benutzer die Trainingsinhalte umsetzt.

Die erfindungsgemäße Einrichtung zum Training einer Ballsportart durch zumindest einen Benutzer, weist zumindest eine Bildprojektionsvorrichtung, zumindest eine Bildaufzeichnungsvorrichtung und zumindest eine Wand auf, wobei die Wand angepasst ist, mit zumindest einem Ball bespielt zu werden, die Bildprojektionsvorrichtung angepasst ist, ein oder mehrere Bilder auf die Wand zu projizieren und die Bildaufzeichnungsvorrichtung angepasst ist, ein oder mehrere Positionen des Balles in Bezug auf die projizierten Bilder aufzunehmen.

In diesem Zusammenhang bedeutet das Merkmal, dass "die Bildaufzeichnungsvorrichtung angepasst ist, ein oder mehrere Positionen des Balles in Bezug auf die projizierten Bilder aufzunehmen" nicht zwingend, dass die Bildaufzeichnungsvorrichtung auch die projizierten Bilder erfassen muss. Dies kann der Fall sein, allerdings kann die Bildaufzeichnungsvorrichtung auch direkt dafür ausgelegt sein, dass die projizierten Bilder nicht aufgenommen werden. Dann bedeutet dieses Merkmal in seiner allgemeinsten Form, dass die Positionen des Balls in Korrelation mit der Position der projizierten Bilder ermittelbar ist. Nur der Bezug zu den projizierten Bildern muss herstellbar sein. Wenn die Lage der Bildaufzeichnungsvorrichtung und die Lage der Bildprojektionsvorrichtung zueinander bekannt sind, dann kann diese Korrelation dadurch hergestellt werden, dass eine Auswertevorrichtung die Lage der projizierten Bilder auf der Wand zu bestimmt und die Position des Balles auf der Wand ermittelt.

In einer vorteilhaften Weiterbildung ist vorgesehen, dass die Bildaufzeichnungsvorrichtung nicht im sichtbaren Wellenlängenbereich arbeitet, sondern bevorzugt im infraroten Wellenlängenbereich, insbesondere bei 950 nm. Dann findet keine Störung der Bildaufzeichnung durch die Bildprojektion statt, da die Bildaufzeichnungsvorrichtung die projizierten Bilder nicht mit erfasst, wodurch Überstrahlungseffekte aber auch Fehlerfassungen vermieden werden. Solche Fehlerfassungen können beispielweise dann auftreten, wenn ein projiziertes Bild als Ball interpretiert wird.

In einer vorteilhaften Weiterbildung ist vorgesehen, dass die Einrichtung angepasst ist, zumindest den Ball mit einer Wellenlänge zu beleuchten, die von der Bildaufzeichnungsvorrichtung erfasst wird. Dann können die Positionen des Balles noch einfacher erfasst werden, weil dieser auch wenn er nicht selbst ausreichend in der von der Bildaufzeichnungsvorrichtung verwendeten Wellenlänge strahlt, so für die Bildaufzeichnungsvorrichtung ausreichend sichtbar ist.

In einer vorteilhaften Weiterbildung ist vorgesehen, dass die Beleuchtung diffus erfolgt. Bevorzugt ist die Beleuchtung indirekt, wozu insbesondere zumindest eine Leuchtquelle besteht, die an einen Deckenbereich der Einrichtung strahlt, wo eine Reflexion erfolgt. Dann werden zum einen Schatten vermieden. Andererseits werden auch Überstrahlungen vermieden, die eine nachträgliche Bildauswertung erschweren würden.

In einer vorteilhaften Weiterbildung ist vorgesehen, dass der zwischen den Wänden bespielbare Raum verdunkelbar ist. Dadurch werden Störeinflüsse von außen vermieden. Außerdem wird die Bildprojektion insbesondere bei Dunklen Bereichen verbessert und die Bildaufzeichnung weniger gestört. Für die Verdunkelung liegt bevorzugt ein in sich geschlossener Deckenbereich vor. Insbesondere weist der die Einrichtung umgebende Raum außer der Bildprojektion keine weitere Leuchtquelle im sichtbaren Wellenlängenbereich auf, ist also optisch geschlossen aufgebaut. Vorzugsweise ist der Raum auch in Bezug auf die Wellenlänge der Bilderfassungsvorrichtung geschlossen aufgebaut.

In einer vorteilhaften Weiterbildung ist vorgesehen, dass die Einrichtung eine Steuerungseinheit und eine Auswertevorrichtung aufweist, die angepasst sind, die Bildprojektionsvorrichtung zu steuern und durch Auswertung der Bildaufzeichnungsvorrichtung festzustellen, ob von der Bildprojektionsvorrichtung angezeigte Vorgaben durch den Benutzer eingehalten werden. Dadurch kann eine direkte Rückmeldung an den Benutzer erfolgen.

In einer vorteilhaften Weiterbildung ist vorgesehen, dass die Einrichtung ausgebildet ist, die Position des Balles an der Wand und den Zeitpunkt des Treffens der Wand dadurch zu bestimmen, dass die Position des Balles zum Zeitpunkt einer unstetigen Bewegungsänderung der Bahn des Balles bestimmt wird. Dadurch wird die Treffpunktlagenerkennung bedeutend vereinfacht, weil die Berührung der Wand aufgrund der elastischen Stoßregeln immer zur einer Unstetigkeit in der Bewegung des Balles führen wird. Auf die gleiche Weise kann auch die Position und Zeit der Ballannahme und der Ballabgabe durch den Spieler bestimmt werden.

In einer vorteilhaften Weiterbildung ist vorgesehen, dass die Auswertevorrichtung die Einrichtung veranlasst, eine Meldung darüber auszugeben, ob von der Bildprojektionsvorrichtung angezeigte Vorgaben durch den Benutzer eingehalten werden. Diese Meldung kann akustisch erfolgen. Bevorzugt erfolgt jedoch eine optische Meldung. Insbesondere erfolgt die Meldung dadurch, dass das projizierte Bild selbst die Meldung anzeigt. Diese optische Meldung kann zumindest eine aus der Gruppe: Änderung der Form, Änderung der Farbe, Änderung der Position, Änderung der Größe und Änderung der Helligkeit des projizierten Bildes sein. Unter "Änderung" wird in diesem Zusammenhang auch ein Hinzufügen oder Wegnehmen verstanden, zum Beispiel könnte bei einem Treffer ein virtueller Fußball in einem getroffenen virtuellen Fußballtor liegen bleiben. Wenn kein Treffer vorliegt, könnte der Ball virtuell am Tor auf der berechneten Bahn vorbeigehen bzw. zurückspringen. Damit kann auch ein Verhalten wie in der normalen Welt imitiert werden, wodurch der Spieler klare Meldungen erhält. Außerdem kann auch die reine Treffpunktlage des Balles auf der Wand selbst angezeigt werden.

Außerdem könnten beispielsweise im Rahmen eines Fußballtrainings Kreise durch die Bildprojektionsvorrichtung angezeigt werden, die der Benutzer mit dem Ball treffen muss. Wenn er getroffen hat, kann der Kreis grün markiert werden. Falls er nicht traf, kann der Kreis rot markiert werden. Andererseits können die Kreise bei einem Treffer auch wegfliegen oder sich in Sterne verwandeln.

In einer vorteilhaften Weiterbildung ist vorgesehen, dass der Benutzer und/oder der Ball Sensoren, bspw. Lagesensoren und/oder Beschleunigungssensoren und dgl., aufweisen. Beispielsweise können die Sensoren am Körper des Benutzers eine Analyse zulassen, womit, insbesondere mit welchem Körperteil, der Benutzer den Ball gespielt hat. Dadurch kann das Training dahingehend verfeinert werden, dass der Benutzer auch bestimmte Trainingsvorgaben einhalten muss, womit er den Ball spielen soll. Aufgrund der Sensoren kann dann beispielsweise eine direkte Auswertung erfolgen, ob er diese Vorgaben eingehalten hat.

Außerdem kann durch Vorsehung von Sensoren und/oder Identifikatoren am Benutzer bei mehreren Benutzern leicht festgestellt werden, welcher Benutzer den Ball gespielt hat.

In einer vorteilhaften Weiterbildung ist vorgesehen, dass die Auswertevorrichtung angepasst ist, den Ball und/oder den Spieler und/oder ein oder mehrere Körperteile des Spielers und/oder Ballspielhilfsmittel mithilfe einer Bilderkennung zu erkennen. "Ballspielhilfsmittel" sind Mittler zwischen Ball und Spieler, also beispielsweise Schläger (bekannt sind zum Beispiel Tennisschläger, Hockeyschläger, etc.) und dgl. Dann sind keine weiteren technischen Mittel, wie gesonderte Positionsgeber notwendig.

In einer vorteilhaften Weiterbildung ist vorgesehen, dass die Bildprojektionsvorrichtung einen Videoprojektor umfasst und/oder dass die Bildaufzeichnungsvorrichtung eine Videokamera, bevorzugt eine Hochgeschwindigkeitskamera umfasst, die zumindest 30 Bilder pro Sekunde, bevorzugt zumindest 60 Bilder pro Sekunde, insbesondere zumindest 90 Bilder pro Sekunde, vorzugsweise 250 Bilder pro Sekunde aufzeichnen kann. Eine solche Ausgestaltung ermöglicht ein sehr abwechslungsreiches Training und außerdem eine hohe Präzision beim Überwachen und Auswerten der Trainingsleistung des Benutzers.

Für den Fall, dass eine IR-Bildaufzeichnungsvorrichtung verwendet wird, handelt es sich bevorzugt um eine Videokamera, die keinen IR-Filter aufweist, wobei die Kamera vorzugsweise einen Sperrfilter für sichtbares Licht aufweist, der insbesondere am Objektiv angeordnet ist, so dass sie nur IR-Strahlung aufzeichnet. Dann kann diese Kamera auch für die Aufzeichnung von für einen Betrachter nachvollziehbaren Videos verwendet werden, weil das Abbild etwa einem gewöhnlichen Graustufenbild entspricht.

In einer vorteilhaften Weiterbildung ist vorgesehen, dass die Bildaufzeichnungsvorrichtung und/oder die Bildprojektionsvorrichtung in Bezug auf die Wand zentral angeordnet ist.

In einer vorteilhaften Weiterbildung ist vorgesehen, dass die Bildaufzeichnungsvorrichtung und/oder die Bildprojektionsvorrichtung oberhalb des Spielers angeordnet ist, insbesondere an einem Deckenabschnitt. Dabei muss die Anordnung nicht direkt an einer Decke vorliegen, sondern es kann auch eine Beabstandung bestehen. Die Decke muss auch nicht geschlossen ausgebildet sein, sondern es kann auch eine Gerüstkonstruktion bestehen, die die Bildaufzeichnungsvorrichtung und/oder die Bildprojektionsvorrichtung trägt.

In einer vorteilhaften Weiterbildung ist vorgesehen, dass die Bildaufzeichnungsvorrichtung nach unten weisend angeordnet ist und eine solche Brennweite in Bezug auf ihren Anordnungspunkt aufweist, dass die gesamte Wandfläche und der zwischen der Wandfläche eingeschlossene Raum erfasst wird. Insbesondere kann es sich um eine Weitwinkel-, vorzugsweise eine Fisheye-Brennweite handeln. Dann muss keine Bewegung der Bildaufzeichnungsvorrichtung erfolgen, sondern der gesamte bespielbare Raum kann gleichzeitig überwacht werden.

In einer vorteilhaften Weiterbildung ist vorgesehen, dass die Bildprojektionsvorrichtung angepasst ist, Bilder, Szenerien und/oder graphische Elemente auf die Wand zu projizieren, wobei die Bilder, Szenerien und/oder graphische Elemente statisch und/oder beweglich auf der Wand erscheinen können. Auch dadurch kann das Training sehr abwechslungsreich gestaltet werden. Im Rahmen eines Fußballtrainings können beispielsweise Kreise (graphisches Element) direkt auf einem Fußballfeld oder ein Fußballtor (Bild) angezeigt werden oder es wird ein Fußballfeld mit sich darauf bewegenden Fußballspielern (Szenerie) angezeigt und darauf Linien (graphisches Element) angezeigt, die zu bespielende Gassen angeben.

In einer vorteilhaften Weiterbildung ist vorgesehen, dass die Einrichtung angepasst ist, unterschiedliche Bilder, Szenerien und/oder graphische Elemente zu projizieren, wobei mit den unterschiedlichen Bildern, Szenerien und/oder graphischen Elementen unterschiedliche Vorgaben verbunden sind. Dann können die kognitiven Fähigkeiten und die Reaktionszeiten der Spieler bedeutend verbessert werden.

In einer vorteilhaften Weiterbildung in die Einrichtung angepasst, reale Spielszenen als virtueller Raum an die Wand zu projizieren und das situative Lösen der Spielszene mit einem geeigneten Spielzug durch den Spieler auszuwerten. Dann ist der Trainingseffekt besonders gut, weil der Spieler im virtuellen Raum gezielt Spielszenen der realen Welt trainieren kann. Beispielsweise könnte es sich um Fußballspielszenen handeln, wobei die aktuelle Position aller Spieler mithilfe von vorliegenden Trackingdaten aller Spieler während eines bestimmten Spieles verwendet und diese Spielszene projektionsgerecht in einem an der Wand projizierten virtuellen Raum mit dem tatsächlichen Spielfeld und allen Akteuren auf dem Spielfeld dargestellt wird und der Spieler die Position eines bestimmten Akteur auf dem Spielfeld einnimmt. Dann könnte bewertet werden, ob der Spieler den Ball nach der Ballannahme rechtzeitig weiterverarbeitet bevor er von einem Spieler der gegnerischen Mannschaft angelaufen wird. Außerdem könnte bewertet werden, ob die Ballverwertung sinnvoll, also beispielsweise ein Sektor des Spielfeldes, in den der Ball geschossen wird, frei war, oder der Ball von einem gegnerischen Spieler erobert werden konnte.

In einer vorteilhaften Weiterbildung ist vorgesehen, dass die Bildprojektionsvorrichtung gegenüber der Wand ausrichtbar angeordnet ist, wobei die Ausrichtung bevorzugt durch die Steuerungseinheit gesteuert wird. Dann können auch sehr große Wandbereiche für die Projektion genutzt werden, um eine möglichst lebensechte Wirkung beispielsweise eines Fußballfeldes zu erzielen. Alternativ oder zusätzlich können auch verschiedene Bildprojektionsvorrichtungen eingesetzt werden, die jedes einen eigenen Raumwinkel ausleuchten. Wenn die Bildprojektionsvorrichtungen auf der Wand zumindest angrenzende bzw. überlappende Bildbereiche erzeugen, dann können sie fest angeordnet sein, wodurch sich die Bildqualität und Auswertegenauigkeit erhöht. Außerdem können unterschiedliche Bildprojektionsvorrichtungen für die Bilder und Szenerien auf der einen und einzublendende graphische Element auf der anderen Seite eingesetzt werden.

In einer vorteilhaften Weiterbildung ist vorgesehen, dass die Bildaufzeichnungsvorrichtung fest mit der Bildprojektionsvorrichtung verbunden ist. Dann ist der Auswertung der Position des Balles gegenüber der Projektion besonders genau möglich.

In einer vorteilhaften Weiterbildung ist vorgesehen, dass die Wand eine Seitenwand umfasst, die bevorzugt kontinuierlich (in sich entlang der Länge der Wand geschlossen ausgebildet, insbesondere als Endloswand) ausgebildet ist, wobei die Seitenwand in Bezug auf eine horizontal verlaufenden Bodenfläche insbesondere kreisförmig, elliptisch oder bogenförmig verläuft. Für eine Begehung des Raumes vor der Wand können schließbare Türen in der Wand vorgesehen sein.

In einer vorteilhaften Weiterbildung ist vorgesehen, dass die Wand gegenüber einer horizontal verlaufenden Bodenfläche vertikal ausgerichtet ist. Alternativ kann auch eine Schrägstellung oder gebogene Ausführung der Wand vorgesehen sein, um den Ball in einer gewünschten Art und Weise zum Benutzer zurückzuwerfen.

In einer vorteilhaften Weiterbildung ist vorgesehen, dass die Wand den Ball im Rahmen eines elastischen Stoßes zurückwerfend ausgebildet ist. Dazu kann beispielsweise ein Stahlrahmen vorgesehen sein, der mit Holzplatten, beispielsweise sogenannten MDF-Platten beplankt ist. Wenn die Wand kreisförmig ausgebildet, dann besteht der Vorteil, dass der Ball nach jedem Schuss des Spielers von der Wand entweder direkt zu ihm zurückkommt oder doch zumindest so nah zu ihm hin, dass er sofort weiter verarbeitet werden kann. Die Reaktionszeit des Spielers für die Ballannahme und Verarbeitung kann damit sehr gut trainiert bzw. überprüft werden.

In einer vorteilhaften Weiterbildung ist vorgesehen, dass die Seitenwand eine Höhe von zumindest 2 m, bevorzugt von zumindest 2,5 m und insbesondere von zumindest 3 m aufweist und/oder dass die Seitenwand eine Länge von zumindest 15 m, bevorzugt von zumindest 30 m, insbesondere von zumindest 60 m aufweist. Dann ist das Trainingserlebnis besonders lebensecht.

In einer vorteilhaften Weiterbildung ist vorgesehen, dass die Wand Oberflächenunebenheiten aufweist, wobei die Wand bevorzugt aneinanderstoßende Platten aufweist, wobei die Unebenheiten durch die Stöße gebildet sind. Durch solche Wandunebenheiten kann ein in der Spielpraxis häufig auftretender Zufall (beispielsweise unvollkommene Bodenverhältnisse beim Fußball) simuliert werden. Alternativ können die Unebenheiten auch anders bereitgestellt werden, beispielsweise durch Dellen oder dgl.

Unabhängiger Schutz wird beansprucht für das erfindungsgemäße Verfahren zum Training einer Ballsportart durch zumindest einen Benutzer, wobei Trainingsinhalte auf eine mit einem Ball bespielbare Wand projiziert werden, der Benutzer das Training absolviert und zugleich mit der Projektion ein oder mehrere Positionen des Balles in Bezug auf die projizierten Trainingsinhalte aufgenommen werden.

In einer vorteilhaften Weiterbildung ist vorgesehen, dass eine Auswertung vorgenommen wird, ob und/oder wie projizierte Trainingsinhalte vom Benutzer erfüllt werden.

In einer vorteilhaften Weiterbildung ist vorgesehen, dass die erfindungsgemäße Einrichtung verwendet wird.

Auch wenn vorstehend die Erfindung im Zusammenhang mit einem Benutzer dargestellt wurde, kann sie auch von mehreren Benutzern zum Training verwendet werden. Beispielsweise können 2 Benutzer sowohl mit- als auch gegeneinander spielen. Es könnten auch 4 Benutzer spielen, wobei dann alle 4 gegeneinander spielen, oder beispielsweise auch jeweils 2 gegen 2. Es kann also nicht nur 1 Benutzer trainieren, sondern es können 2 und mehrere Benutzer mit und/oder gegeneinander in beliebigen Konstellationen trainieren.

Auch wenn vorstehend von "Training" die Rede ist, kann die Erfindung auch, zum nicht auf ein Training abzielendes, reines Spielen oder einen Wettkampf genutzt werden. "Training" meint also im Rahmen der Erfindung jegliches Spielen mit zumindest einem Ball.

Die Kennzeichen und weitere Vorteile der vorliegenden Erfindung werden im Folgenden anhand der Beschreibung zweier bevorzugter Ausführungsbeispiele im Zusammenhang mit den Figuren deutlich werden. Es zeigt rein schematisch:
- Fig. 1: die erfindungsgemäße Einrichtung in einer perspektivischen Gesamtansicht,
- Fig. 2: einen Wandabschnitt der Einrichtung an Fig. 1 in einer Draufsicht,
- Fig. 3: einen Wandabschnitt der Einrichtung an Fig. 1 in einer perspektivischen Seitenansicht,
- Fig. 4: die erfindungsgemäße Einrichtung nach Fig. 1 in einer Blockbilddarstellung,
- Fig. 5a bis c: verschiedene Ansichten zum Einsatz der Einrichtung nach Fig. 1,
- Fig. 6: eine erste alternative Ausgestaltung der erfindungsgemäßen Einrichtung und
- Fig. 7a bis c: eine zweite alternative Ausgestaltung der erfindungsgemäßen Einrichtung.

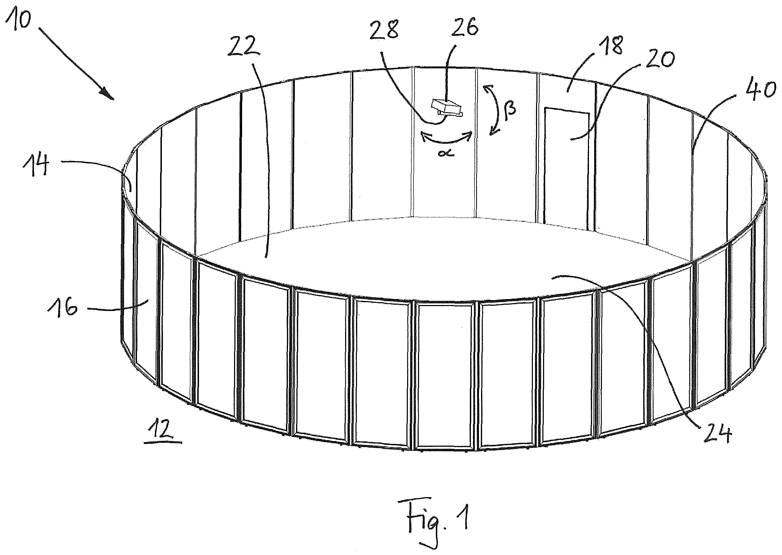

Die Figuren 1 bis 5d zeigen eine erste bevorzugte Ausführungsform der erfindungsgemäßen Trainingseinrichtung 10.

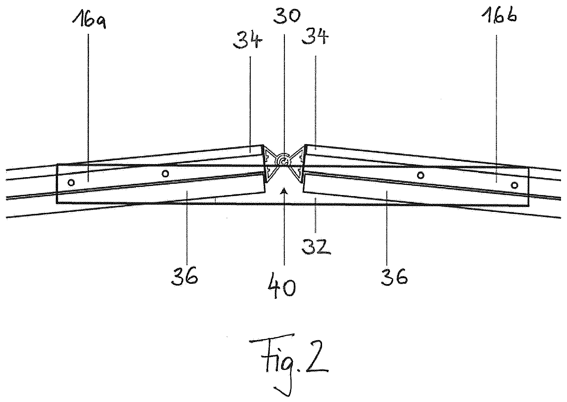

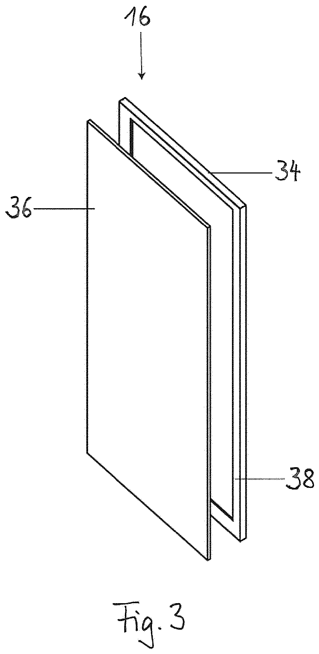

In Fig. 1 ist die erfindungsgemäße Trainingseinrichtung 10 rein schematisch in einer perspektivischen Gesamtdarstellung gezeigt. Es ist zu erkennen, dass die Einrichtung 10 eine auf einem Untergrund 12 sich senkrecht erhebende Seitenwand 14 aufweist. Diese Seitenwand 14 besteht aus 32 Wandsegmenten 16 (vgl. Fig. 3), die entsprechend Fig. 2 miteinander festverbunden sind. Eines der Wandsegmente ist dabei als Türsegment 18 mit einer öffenbaren Tür 20 ausgebildet.

In dem durch die Seitenwand 14 gebildeten Innenraum 22 ist der Untergrund 12 mit einem geeigneten Teppich 24, beispielsweise einem Kunstrasen belegt. Die Seitenwand 14 ist in horizontaler Richtung in sich geschlossen ausgebildet und weist eine Höhe von 2,5 m und einen Umfang von ca. 33 m auf. Damit ergibt sich eine bespielbare Grundfläche von ca. 85 m².

Weiterhin weist die Einrichtung 10 eine Bildprojektionsvorrichtung 26 und eine Bildaufzeichnungsvorrichtung 28 auf, die fest miteinander verbunden sind. Dabei ist die Bildprojektionsvorrichtung 26 an einer geeigneten Halterung (nicht gezeigt) angeordnet, die beispielsweise an einer Decke über dem Spielfeld 24 befestigt ist. Diese Halterung ist bevorzugt über dem Kreismittelpunkt des Spielfeldes 24 angeordnet und mit ihrer Hilfe kann die Bildprojektionsvorrichtung 26 um 360° entlang α des Umfangs der Seitenwand 14 verschwenkt, also horizontal verdreht werden. Bevorzugt ist auch eine Verkippbarkeit β gegenüber der Vertikalen vorgesehen, damit die Bildprojektionsvorrichtung 26 die gesamte Höhe der Seitenwand 14 überstreichen kann. Alternativ kann auch eine Bildprojektionsvorrichtung 26 mit einem großräumigen zu bestrahlendem Raumwinkel vorgesehen sein, so dass eine Verkippung gegenüber der Vertikalen entbehrlich wäre.

Wie Fig. 2 zu entnehmen ist, sind zwei benachbarte Wandelemente 16a, 16b mit dazwischen angeordneten Verbindungselementen 30 verschraubt, die regelmäßigem Abstand über die vertikale Höhe der Wandelemente 16a, 16b vorgesehen sind. Zusätzlich sind zur Aussteifung der Verbindung Aussteifungsbleche 32 vorgesehen. Die Verbindungselemente 30 und die Aussteifungsbleche 32 sind jeweils mit einem Profilrahmen 34 beider Wandelemente 16a, 16b verschraubt.

In Fig. 3 ist zu erkennen, dass der Profilrahmen 34 zur Aussteifung des Wandelements 16 selbst dient, das zusätzlich eine bespielbare Wandpanele 36 aufweist, die beispielsweise mittels Klettband (nicht gezeigt) mit dem Profilrahmen 34 verbunden ist.

Während der Profilrahmen 34, die Verbindungselemente 30 und die Aussteifungsbleche 32 aus Metalle, insbesondere einem Edelstahl gefertigt sind, sind die Wandpanele 36 aus Holz gefertigt, insbesondere aus einem MDF-Material. Der Profilrahmen 34 weist eine Tiefe von 4 cm auf, wobei die miteinander verschweißten Stahlstreben 38 hohl gefertigt sind und eine Materialdicke von 3 mm aufweisen. Die Wandpanele 36 wiederum weisen eine Materialstärke von 3 cm auf. Die Breite der Wandelemente 16 beträgt ca. 99 cm. Durch den Aufbau der Seitenwand 14 mit aneinandergereihten Wandelementen 16 ergeben sich Stöße 40, an denen die Seitenwand 14 zwar geschlossen bleibt, jedoch ein Knick in der Seitenwand 14 gebildet wird (vgl. Fig. 1 und 2).

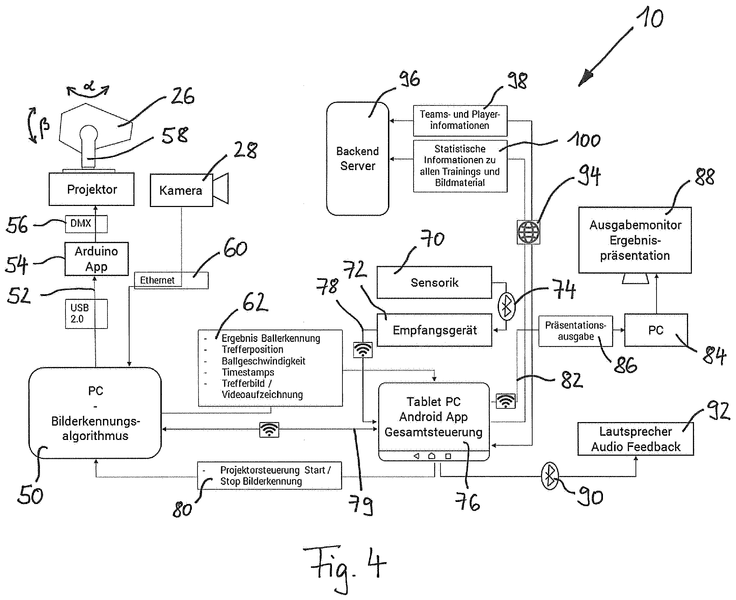

In Fig. 4 ist die gesamte Ausstattung der Einrichtung 10 in einer Blockbilddarstellung gezeigt.

Es ist zu erkennen, dass die Einrichtung 10 eine Bildprojektionsvorrichtung 26 und eine Bildaufzeichnungsvorrichtung 28 aufweist, die beide mit einer Steuerungseinheit 76 und einer Auswertevorrichtung 50 verbunden sind. Genauer gesagt ist die Steuerungseinheit 76 über Wlan mit der Auswertevorrichtung 50 verbunden und diese über einen USB-Anschluss 52 mit einer Arduino-Applikation 54, die ihrerseits die Bildprojektionsvorrichtung 26 über DMX (Digital Multiplex) 56 entsprechend den Vorgaben der Steuerungseinheit 76 steuert. Durch eine geeignete gelenkige Anbindung 58 der Bildprojektionsvorrichtung 26 werden Steuerbefehle der Steuerungseinheit 76 hinsichtlich Drehung α und Verkippung β umgesetzt.

Fest verbunden mit der Bildprojektionsvorrichtung 26, beispielsweise mit ihr verschraubt, ist die Bildaufzeichnungsvorrichtung 28, die über eine Ethernet-Verbindung 60 mit der Auswertevorrichtung 50 gekoppelt ist und von ihr ausgelesen und verarbeitet wird.

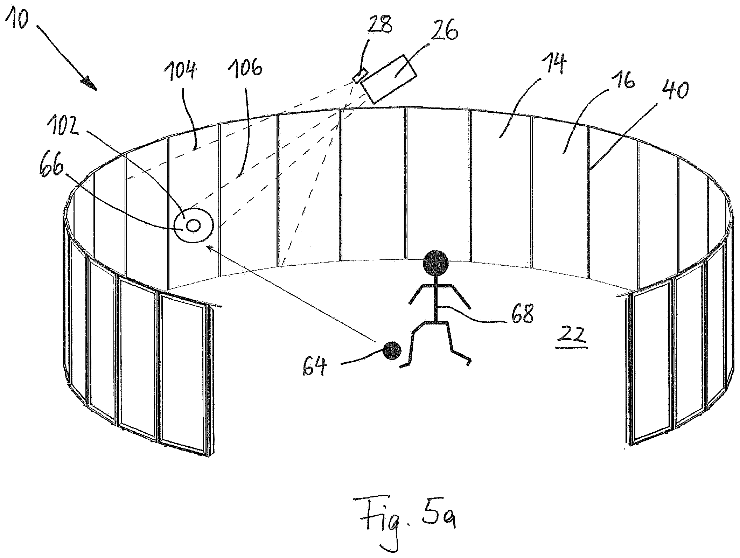

Auf der Auswertevorrichtung 50 läuft ein an sich dem Fachmann bekanntes bzw. geeignete anpassbares Programm zur Bilderkennung (mit dem Programm ermittelte Parameter sind mit dem Bezugszeichen 62 beispielhaft gezeigt), das geeignet ist, den Spielball 64 (vgl. Fig. 5a bis 5d) zu erkennen, die Trefferposition des Spielballs 64 hinsichtlich der Seitenwand 14 und hinsichtlich einer vorgegeben Markierung 66 (vgl. Fig. 5a bis 5d) festzustellen und die Ballgeschwindigkeit zu bestimmen. Außerdem zeichnet die Auswertevorrichtung 50 mithilfe der Bildaufzeichnungsvorrichtung 28 das Trefferbild und/oder einen Videostream auf, bei dem für einzelne Interaktionen (z.B. Berührung des Spielballs 64 durch den Benutzer 68 und Auftreffen des Spielballs 64 auf der Seitenwand 14) Zeitstempel abgespeichert werden.

Zur Ermittlung entsprechender Ereignisse können zusätzliche Sensoren 70 vorgesehen sein, beispielsweise Lage- bzw. Positionssensoren im Spielball 64 und Beschleunigungssensoren an den Füßen (beispielsweise an oder in Schuhen) des Benutzers 68. Diese Sensoren 70 sind mit entsprechenden Empfangsgeräten 72, beispielsweise über eine Bluetooth-Verbindung 74 auslesbar und speisen eine Anwendungsapplikation auf einer mobilen Datenverarbeitungsvorrichtung 76, die zugleich auch die Steuerungseinheit 76 ist und beispielsweise als Tablet ausgebildet ist, über eine entsprechende WLan-Verbindung 78.

Die mobile Steuerungseinheit und Datenverarbeitungsvorrichtung 76 ist nicht nur für das Auslesen der Sensordaten zuständig, sondern dient auch der Einrichtung der Auswertevorrichtung 50 und damit der gesamten erfindungsgemäßen Einrichtung nach den Wünschen des Benutzers 68 über eine weitere WLan-Verbindung 79. Außerdem dient sie dem Starten und Beenden 80 des Trainingsvorgangs mit der Einrichtung 10. Dieses Starten und Beenden könnte dadurch veranlasst werden, dass der Spieler auf der Wand 14 ein bestimmtes Symbol trifft.

Über eine weitere WLan-Verbindung 82 ist die mobile Steuerungseinheit und Datenverarbeitungsvorrichtung 76 mit einem Computer 84 zur Präsentationsausgabe 86 auf einer geeigneten Anzeigevorrichtung 88, beispielsweise einem Flachbildschirm, eingerichtet. Außerdem bespielt die mobile Steuerungseinheit und Datenverarbeitungsvorrichtung 76 über eine Bluetooth-Verbindung 90 Lautsprecher 92, um dem Benutzer 68 Anweisungen, Rückmeldungen und dgl. zu geben oder auch angepasste Umgebungsgeräusche oder Musik vorzuspielen. Für diese Tonausgabe wird bevorzugt eine 3D-Ausgabe, beispielsweise Dolby^{®}-Surround verwendet, um örtliche Informationen vermitteln zu können.

Schließlich ist die mobile Steuerungseinheit und Datenverarbeitungsvorrichtung 76 über eine Internetverbindung 94 mit einer zentralen Servervorrichtung 96 verbunden, auf der eine Datenbankfunktion läuft, um Teams- und Player (Benutzer)-Informationen und Ergebnisse 98 abzuspeichern und vorrätig zu halten und statistische Informationen zu allen Trainings und dazugehöriges Bild- bzw. Videomaterial 100 bereitzustellen.

Bei der Bildprojektionsvorrichtung 26 handelt es sich um einen kommerziell erhältlichen Videoprojektor cameo vom Typ OLMHRGB60W (LED Moving Head) der Adam Hall GmbH, Daimlerstraße 9, 61267 Neu-Anspach. Die Bildaufzeichnungsvorrichtung 28 ist eine GigE Hochgeschwindigkeitskamera vom Typ DFK 33GP1300 der Firma The Imaging Source Europe GmbH, Sommerstr. 36, 28215 Bremen mit einer Auflösung von 1280x1024 Pixel, die bei voller Auflösung 90 Bilder pro Sekunde (fps) verarbeiten kann.

Ein Trainingsablauf ist nun den Fig. 5a bis 5d im Detail zu entnehmen, wobei der Übersichtlichkeit halber der vordere Teil der Seitenwand 14 nicht gezeigt ist. (In diesen Figuren ist die Bildprojektionsvorrichtung 26 im Gegensatz zur Fig. 1 unterhalb der Bildaufnahmevorrichtung 28 abgebildet, was aber für die Funktion keine Rolle spielt, solange die beiden Element 26, 28 nicht gegenseitig den Projektionsbereich bzw. den Aufnahmebereich auf der Seitenwand 14 stören.)

Nach dem Starten des Trainingsprogramms für einen Benutzer 68 stellt dieser sich mit einem Fußball 64 im Innenraum 22 der Einrichtung 10 auf. Es wird mit Hilfe der Projektionsvorrichtung 26 eine Zielmarkierung 66 an einer ersten Position 102 auf der Seitenwand 14 vorgegeben, die als weißer Ring ausgebildet ist, der einen Durchmesser von bis zu 70 cm aufweist, wobei der Fußball 64 einen Durchmesser von 21 cm aufweist.

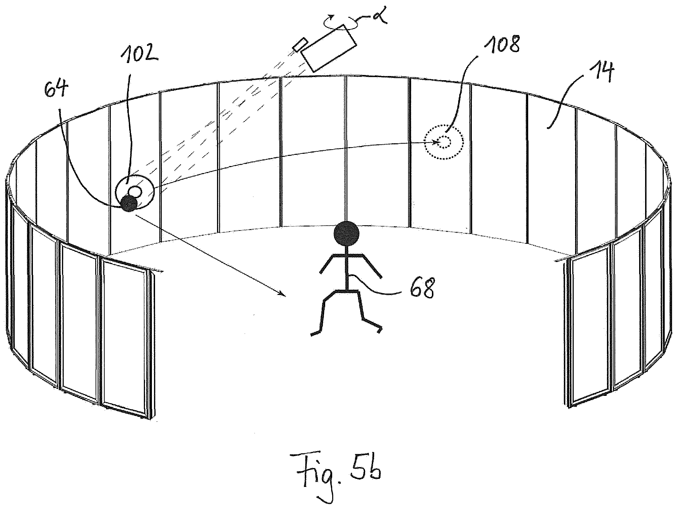

Dieser Ring 66 wird an der ersten Position 102 vom Benutzer 68 anvisiert. Der Ring 66 kann stillstehen, jedoch ist es auch möglich, dass er sich mit einer bestimmten Geschwindigkeit und Richtung bewegt (wobei diese Größen abhängig von einem gewählten Schwierigkeitsgrad sein können). Im Fall des Stillstehens muss Benutzer 68 seinen Schuss nun so ausführen, dass der Fußball 64 den Ring 66 an der ersten Position 102 trifft, so wie es in Fig. 5b gezeigt ist.

Die Bildaufnahmevorrichtung 28 überwacht 104 ständig den Projektionsbereich 106 der Projektionsvorrichtung 26 und ermittelt die Position des Fußballs 64 zum Zeitpunkt des Auftreffens auf der Seitenwand 14 in Bezug auf die projizierte Position 102 des Rings 66. Zusätzlich kann der Ball einen Lagepositionssensor enthalten und der Benutzer kann Sensoren tragen, die angeben, mit welchem Fuß er geschossen hat. Daraus können weitere nützliche Parameter gewonnen werden, wie Ballrotation, Flugeigenschaften des Balls, Ballverarbeitungsgeschwindigkeit. Andererseits können diese Informationen auch allein mittels einer Bilderkennung gewonnen werden.

Wenn die Einrichtung 10 feststellt, dass der Fußball 64 zum Zeitpunkt des Auftreffens auf der Seitenwand 14 den projizierten Ring 66 zumindest berührte (vgl. Fig. 5b), wird ein akustisches Treffersignal ausgegeben und zugleich der Ring 66 kurz grün gefärbt.

Dieses Feststellen eines Treffers kann so erfolgen, dass mithilfe der Bilderkennung eine Unstetigkeit in der Bewegung des Fußballs 64 festgestellt wird, die zwangsläufig in der Form einer Richtungsveränderung beim Auftreffen auf die Wand 14 passiert. Dadurch können die Position und die Zeit des Auftreffens auf die Wand 14 bestimmt und mit der Position und der Zeit der Projektion des Ringes 66 korreliert werden.

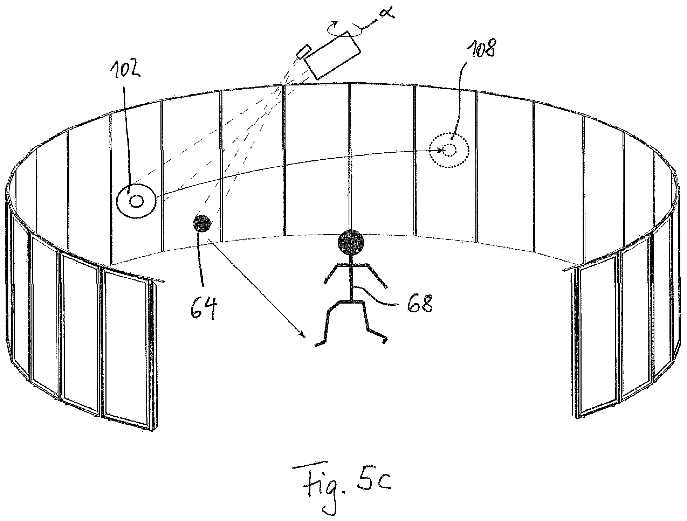

Wenn die Einrichtung 10 dagegen feststellt, dass der Fußball 64 zum Zeitpunkt des Auftreffens auf der Seitenwand 14 den projizierten Ring 66 nicht zumindest berührte (vgl. Fig. 5c), wird ein akustisches Fehlersignal ausgegeben und zugleich der Ring 66 kurz rot gefärbt.

Nach dem Auftreffen des Fußballs 64 auf der Seitenwand 14 prallt der Ball in den Innenraum 22 zurück und der Benutzer 68 muss sich gegenüber dem Fußball 64 bewegen, um seinen nächsten Schuss platziert abgeben zu können. Dazu ist eine große Ausdauer und Beweglichkeit erforderlich. Außerdem ist eine Art zufälliger Spielbeeinflussung durch die zwischen Wandelementen 16 sich ausbildenden Knicke an den Stößen 40 gegeben, die eine ähnliche Wirkung haben wie Platzunebenheiten und dgl. Zufälligkeiten.

Zugleich wird die Projektion des Rings 66 zu einer neuen Position 108 bewegt, wozu die Projektionsvorrichtung 26 um einen bestimmten Winkelbereich α gedreht und ggf. vertikal verkippt wird. Wenn der Winkelbereich dagegen relativ klein ist, kann auch eine reine Bewegung innerhalb des Projektionsbereichs 106 erfolgen.

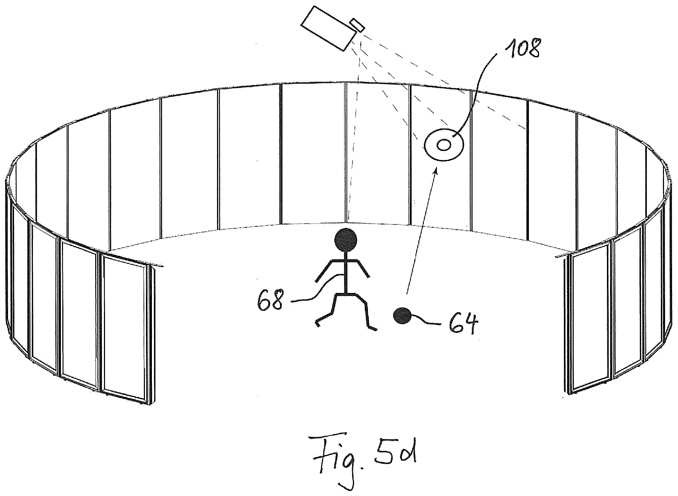

Der Benutzer 68 visiert auch diese neue Position 108 an und versucht wiederum zu treffen (vgl. Fig. 5d), wozu ihm jeweils eine fest vorgegebene Zeit gegeben wird, die von einem bestimmten Schwierigkeitsgrad abhängen kann. Dann beginnt die Trefferermittlung entsprechend Fig. 5b und Fig. 5c erneut.

Eine Fehleranzeige erfolgt entsprechend Fig. 5c auch stets, wenn der Ring 66 erst nach Ablauf der Zeitvorgabe an der jeweiligen Position 102, 108 getroffen wird, die Ballverarbeitungsgeschwindigkeit durch den Benutzer 68 also zu gering war.

Neben solchen rein schematischen Zielvorgaben 66, deren zeitliche Positionierung natürlich bestimmten Trainingsroutinen entsprechend gesteuert werden kann, ist auch die Projektion von realistischen Motiven, wie Mit- und Gegenspieler, Toren, Fußballfeldlinien und dgl. möglich. Dann könnten beispielsweise mit bestimmten Linien Gassen definiert werden, in die hinein gespielt werden soll, um das schnelle situationsabhängige Spielen in Schnittstelle der gegnerischen Mannschaft zu trainieren. Oder die Gassen sind durch die Mitspieler und die gegnerischen Spieler definiert.

Die erfindungsgemäße Einrichtung 10 ermöglicht ersichtlich nicht nur beim Fußball, sondern auch bei vielen anderen Ballsportarten, wie Handball und Tennis, Trainingsverfahren unter gleichbleibenden Bedingungen. Trainiert werden dabei komplexe Situationen der Ballannahme sowie die Ballverarbeitung und das gezielte Weiterspielen mit dem Ziel, parallel die Handlungsschnelligkeit der Spieler 68 zu verbessern.

Hierfür können auch eine unterschiedliche Anzahl von Zielen 66 an die Seitenwand 14 projiziert (in Fig. 5a bis 5d ist nur ein Ziel gezeigt). Diese Ziele 66 können sich auch durch Form, Farbe und Größe und deren Bewegung gegeneinander im virtuellen Raum unterscheiden. Der Spieler 68 soll dann beispielsweise relevante Ziele 102 unter allen projizierten Zieloptionen identifiziert (es können also auch nicht zu treffende Ziele angezeigt werden) und versuchen, eines der relevanten Ziele so schnell und genau wie möglich zu treffen.

Eine besondere Trainingsmethode könnte vorsehen, dass viele verschiedene Ziele angezeigt werden und dem Spieler optisch und/oder akustisch vorgegeben wird, welches der Ziele er treffen muss und zu welchem Zeitpunkt.

Beispielsweise könnten ihm rings im Raum beabstandet Fußballtore angezeigt werden, wovon einige als geschlossen und eines oder mehrere für eine bestimmte Zeit als geöffnet angezeigt werden, und der Spieler 68 muss dann ein offenes Fußballtor zum richtigen Zeitpunkt treffen.

Oder es könnten zur Steigerung der kognitiven Fähigkeiten eine mehrere Ziele angezeigt werden, die zumindest zwei Farben aufweisen und auf die sich jeweils ein bestimmtes Element mit einer bestimmten Geschwindigkeit zubewegt. Das Ziel des Spielers ist es, durch Treffen des Zieles dessen Farben so auszurichten, dass die Farbe des Elements und die zu ihm weisende Farbe des Zieles übereinstimmen. Dabei könnte es sich als Ziele um Ringe oder drgl. Handeln, deren obere Hälfte eine andere Farbe als deren untere Hälfte aufweist, wobei sich ein Ball als jeweiliges Element von oben dem Ziel nähert und man die obere Farbe des Ziels mit der Farbe des Elements in Übereinstimmung bringen muss, bevor das Element das Ziel trifft. Die Geschwindigkeit des Bewegens des Elements kann dabei der Fähigkeit des Spielers angepasst und/oder während des Spiels gesteigert werden. Es handelt sich dabei also um Aufgaben noch dem Schlüssel-Schloss-Prinzip.

Für unterschiedliche Trainingsmethoden können dabei jeweils unterschiedliche, vom Benutzer 68 bzw. einem Trainer abrufbare Modi in der Einrichtung 10 hinterlegt sein.

Durch den Rückprall des Balls 64 von der Seitenwand 14 ergibt sich direkt eine neue Trainingssituation. Der Spieler 68 muss den Ball 64 erneut verarbeiten, während sich die Zieloptionen verändern. Je nach Modus ist das Spiel beendet, wenn der Spieler 68 eine definierte Zeit gespielt hat oder eine bestimmte Punktzahl von ihm erreicht wird.

Da die Wand 14 nahezu kreisrund ausgebildet ist, wird der Fußball 64, wenn der Spieler 68 sich in der Mitte befindet, stets in die Mitte zurückprallen, wodurch sich eine besonders schnelle Spielfolge ergibt, wodurch die Reaktionszeit und Ballverarbeitungsgeschwindigkeit des Spielers 68 sehr einfach trainiert werden können.

Über die Rückprallmethode wird dabei generell ermöglicht, dass in kürzester Zeit eine hohe Zahl an verschiedenen Situationen trainiert werden kann. Die erhobenen Daten während eines Trainingsspiels werden ausgewertet, gespeichert und vergleichbar gemacht. Damit wird ein effektives Benchmarking von Spielern 68 erreicht.

Folgende trainingsrelevante Daten können beispielweise erhoben werden:
- Anzahl der Treffer
- Anzahl der Fehlschüsse
- Genauigkeit im Trefferbild (Heatmap)
- Trefferquote
- Zeit
- Ballverarbeitungszeit, Zeit von Ballannahme bis zum Abspielen und/oder Zeit von zwischen Ballannahme mit einem Körperteil bis zur Berührung mit einem anderen Körperteil, beispielsweise Fuß
- Geschwindigkeit des Balles 64
- Rotation und Flugkurve des Balls
- Fuß oder Hand des Benutzers 68, mit der gespielt wurde
- Position des oder der Spieler 68 in der Einrichtung
- Position des oder der Bälle 64 in der Einrichtung

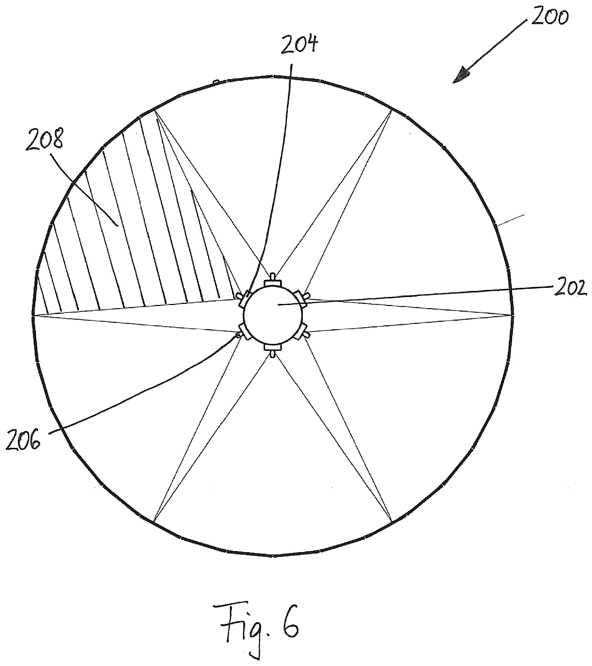

Fig. 6 zeigt eine zweite bevorzugte Ausführungsform der erfindungsgemäßen Trainingseinrichtung 200, die sich von der ersten bevorzugten Ausgestaltung 10 nur durch die Bildprojektions- und Bildaufnahmevorrichtung 202 unterscheidet.

Genauer gesagt weist die Bildprojektions- und Bildaufnahmevorrichtung 202 nicht nur einen, sondern sechs Bildprojektoren 204 und sechs Bildaufnahmevorrichtungen 206 auf, die starr in regelmäßigem Abstand so angeordnet sind, dass sie jeweils einen Winkelbereich 208 der Seitenwand 14 überdecken und die Winkelbereiche 208 zumindest aneinander angrenzen (es könnte auch eine Überdecken der Winkelbereiche 208 erfolgen).

Dann muss keine Verschwenkung α der einzelnen Bildprojektoren 204 und Bildaufnahmevorrichtungen 206 erfolgen, so dass gleichzeitig die gesamte Seitenwand 14 der Trainingseinrichtung 200 bespielbar ist.

Die Bildprojektoren 204 und die zugeordneten Bildaufzeichnungsvorrichtungen 206 überdecken dabei bevorzugt dieselben Winkelbereiche 208, wobei diese auch verschoben sein können, solange die jeweiligen Winkelbereiche 208 aneinander zumindest angrenzen. Auch sind die Bildprojektoren 204 und die zugeordneten Bildaufzeichnungsvorrichtungen 206 jeweils fest miteinander verbunden.

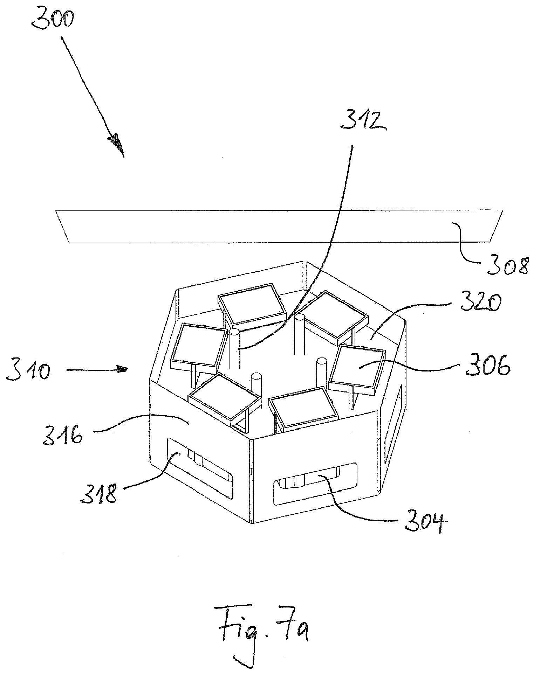

Während in Fig. 6 jeder Bildprojektionsvorrichtung 204 jeweils eine eigene Bildaufzeichnungsvorrichtung 206 zugeordnet ist, ist bei der dritten bevorzugten Ausführungsform 300 nach den Fig. 7a bis 7c nur eine einzelne Bildaufzeichnungsvorrichtung 302 vorgesehen. Bei dieser Ausführungsform ist der bespielbare Raum 22, der identisch wie bei der in den Fig. 1 bis 5d gezeigten ersten bevorzugten Ausführungsform der erfindungsgemäßen Trainingseinrichtung 10 ausgebildet ist, nicht gesondert dargestellt.

Bei der Bildaufzeichnungsvorrichtung 302 handelt es sich um eine IR-Kamera, die zentral unterhalb von sechs gleich beabstandeten Bildprojektionsvorrichtungen 304 angeordnet ist, und zwar so, dass sie exakt über dem geometrischen Mittelpunkt des zu bespielenden Raumes 22 angeordnet ist. Diese IR-Kamera 302 weist eine solche Optik auf, dass die Kamera 302 gleichzeitig den gesamten bespielten Raum 22 einschließlich der vollständigen Wand 14 erfasst. Dazu ist die Optik geeignet als Weitwinkel oder Fisheye ausgebildet, je nach Größe des Raumes 22 und Höhe der Anordnung der Kamera 302 über dem Boden 24.

Die Bildprojektionsvorrichtungen 304 sind mit der Bildaufzeichnungsvorrichtung 302 dabei vorzugsweise in einer solchen Höhe über dem Boden 24 angeordnet, dass über einen großen Aufenthaltsbereich des Spielers 68 in der Einrichtung 300 keine Verschattung der Wand 14 durch den Spieler 68 auftritt.

Außerdem sind jeweils oberhalb einer jeden Bildprojektionsvorrichtung 304 Infrarot-Strahler 306 mit einer Abstrahlungswellenlänge von 950 nm angeordnet, die senkrecht nach oben an eine planparallel zum Boden 24 angeordneten Decke 308 strahlen. Dadurch wird durch die Rückreflexion von der Decke 308 der zu bespielende Raum 22 diffus und homogen mit Infrarotstrahlung beleuchtet. Diese Infrarotstrahlung wird vom Spieler 68 nicht wahrgenommen und stört auch nicht die Bildprojektion.

Durch die IR-Beleuchtung sind nicht nur die Wand 14 und der Boden, sondern auch der Ball 64 und der Spieler 68 mit seinen einzelnen Körperteilen für die IR-Kamera 302 deutlich erfassbar und anschließend für eine entsprechende Bilderkennung gut unterscheidbar. Dabei wird die Bilderkennung überhaupt nicht von der Bildprojektion 304 im sichtbaren Wellenlängenbereich beeinflusst.

Die Bildaufzeichnungsvorrichtung 302, die sechs Bildprojektionsvorrichtungen 304 und die IR-Strahler 306 sind gemeinsam in einer Einheit 310 angeordnet, die mithilfe von nur verkürzt dargestellten Trägern 312 beispielsweise an der Decke 308 hängend angeordnet ist.

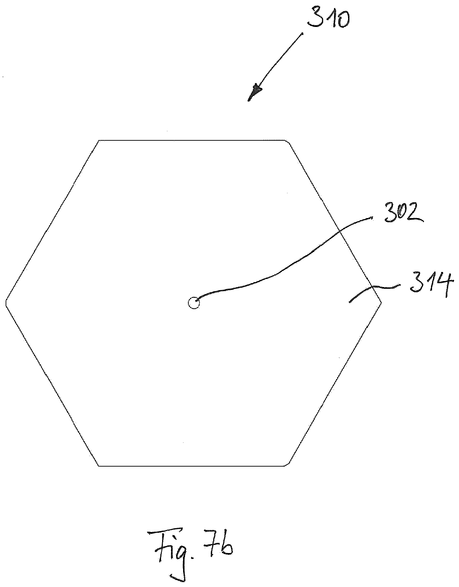

Fig. 7b zeigt dabei die Einheit 310 von dem Boden 24 aus von unten betrachtet, wobei die zentral angeordnete Bildaufzeichnungsvorrichtung 302 und die untere Deckfläche 314 der Einheit 310 zu erkennen sind.

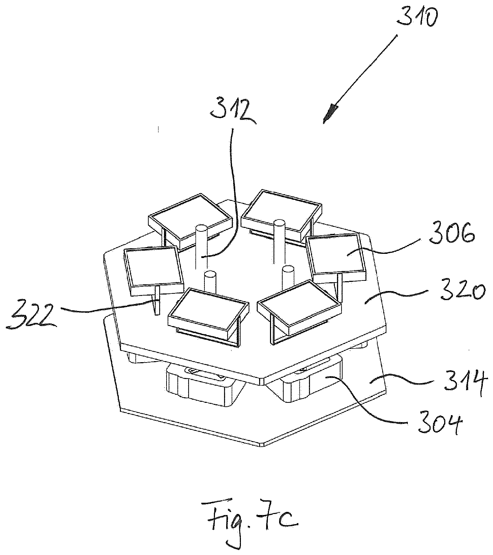

In Fig. 7c sind die Seitenwandbereiche 316 der Einheit 310, durch deren Aussparungen 318 die Bildprojektionsvorrichtungen 304 jeweils projizieren, zur besser Verdeutlichung entfernt. Es ist zu erkennen, dass die Bildprojektionsvorrichtungen 304 auf der unteren Deckfläche 314 angeordnet sind, wobei oberhalb der Bildprojektionsvorrichtungen 304 eine obere Deckfläche 320 angeordnet ist, auf der die IR-Strahler 306 verschwenkbar 322 befestigt sind.

Es ist deutlich geworden, dass die erfindungsgemäße Einrichtung 10 und das dahinter stehende erfindungsgemäße Verfahren ein Computer gestütztes abwechslungsreiches und individuell anpassbares Training für Fußballspieler 68, insbesondere Profifußballer ermöglicht. Dabei ist der Benutzer 68 ständig in Bewegung und erhält eine direkte Rückmeldung zur Treffgenauigkeit und zum Einhalten von Zeitvorgaben, so dass er seine Pass- bzw. Schussgenauigkeit und auch die Ballverarbeitungsgeschwindigkeit spielerisch verbessern kann und gleichzeitig seine Handlungsgeschwindigkeit schult. Darüber hinaus ist auch ein Benchmarking von Spielern 68 unter Berücksichtigung ihres Alters und ihrer Spielposition (Stürmer, Abwehrspieler, Mittelfeldspieler, Torwart) möglich, wodurch Leistungen und durch wiederholtes Training erzielte Verbesserungen objektiv messbar sind und so zum Ansporn für die Spieler 68 werden. Darüber hinaus kann die erfindungsgemäße Einrichtung 10 und das dahinterstehende Verfahren als Scouting-Instrument für Vereine gewinnbringend genutzt werden.

Auch wenn vorstehend die Erfindung im Zusammenhang mit einem Spieler 68 erläutert wurde, kann sie auch von mehreren Benutzern 68 verwendet werden. Beispielsweise können 2 Benutzer sowohl mit- als auch gegeneinander spielen. Es könnten aber auch 4 Benutzer spielen, wobei dann alle 4 gegeneinander spielen, oder beispielsweise auch jeweils 2 gegen 2. Es kann also nicht nur 1 Benutzer 68 trainieren, sondern es können 2 und mehrere Benutzer 68 mit und/oder gegeneinander in beliebigen Konstellationen trainieren.

Jedem Benutzer 68 könnte hierzu ein eigenes Profil zugewiesen werden, so dass deren Ergebnisse unterscheidbar sind. Beispielsweise könnten die Benutzer durch eine entsprechende Bilderkennung voneinander unterschieden werden. Allerdings wird es bevorzugt, wenn jedem Benutzer 68 ein eigener Sensor oder Identifikator, bspw. in Form eines RFID-Tags, zugeordnet ist, so dass entsprechende Aktionen schneller zugeordnet und verarbeitet werden können.

Auch wenn mehrere Bälle 64 im Spiel sind, sollten diese mit eigenen Sensoren bestückt sein, um sie besser unterscheiden zu können.

Auch wenn die Erfindung anhand des Fußballspiels erläutert wurde, kann sie dennoch ersichtlich für jede Ballsportart, ob mit oder ohne Ballspielhilfsmittel (Schläger oder drgl.) Gewinn bringend eingesetzt werden.

Soweit nichts anders angegeben ist, können sämtliche Merkmale der vorliegenden Erfindung frei und isoliert von anderen Merkmalen miteinander kombiniert werden. Auch die in der Figurenbeschreibung beschriebenen Merkmale können, soweit nichts anderes angegeben ist, als Merkmale der Erfindung frei und isoliert mit den übrigen Merkmalen, insbesondere den Anspruchsmerkmalen, kombiniert werden. Dabei können gegenständliche Merkmale auch formuliert als Verfahrensmerkmale Verwendung finden und Verfahrensmerkmale formuliert als gegenständliche Merkmale.

### Bezugszeichenliste

- 10: Einrichtung zum Training einer Ballsportart, erste bevorzugte Ausführungsform
- 12: Untergrund
- 14: Seitenwand
- 16, 16a, 16b: Wandsegmente
- 18: Türsegment
- 20: öffenbare Tür
- 22: Innenraum
- 24: Teppich, Kunstrasen
- 26: Bildprojektionsvorrichtung
- 28: Bildaufzeichnungsvorrichtung
- 30: Verbindungselemente
- 32: Aussteifungsbleche
- 34: Profilrahmen
- 36: bespielbare Wandpanele
- 38: Stahlstreben
- 40: Stöße
- 50: Auswertevorrichtung
- 52: USB-Anschluss
- 54: Steuerapplikation
- 56: DMX (Digital Multiplex)
- 58: gelenkige Anbindung der Bildprojektionsvorrichtung 26
- 60: Ethernet-Verbindung
- 62: Programm zur Bilderkennung
- 64: Spielball, Fußball
- 66: Markierung 66
- 68: Benutzer, Fußballspieler
- 70: Sensoren
- 72: Empfangsgeräte für Sensoren 70
- 74: Bluetooth-Verbindung
- 76: mobile Steuerungseinheit und Datenverarbeitungsvorrichtung, Tablet
- 78: WLan-Verbindung
- 79: WLan-Verbindung
- 80: Starten und Beenden des Trainingsvorgangs mit der Einrichtung
- 82: WLan-Verbindung
- 84: Computer
- 86: Präsentationsausgabe
- 88: Anzeigevorrichtung, Flachbildschirm
- 90: Bluetooth-Verbindung
- 92: Lautsprecher
- 94: Internetverbindung
- 96: zentrale Servervorrichtung
- 98: Teams- und Player (Benutzer)-Informationen und Ergebnisse
- 100: statistische Informationen zu allen Trainings und dazugehöriges Bild- bzw. Videomaterial
- 102: erste Position der Markierung 66
- 104: Überwachung des Treffers
- 106: Projektionsbereich Projektionsvorrichtung 26
- 108: neue Position der Markierung 66
- 200: Einrichtung zum Training einer Ballsportart, zweite bevorzugte Ausführungsform
- 202: Bildprojektions- und Bildaufnahmevorrichtung
- 204: Bildprojektoren
- 206: Bildaufnahmevorrichtungen
- 208: Winkelbereich
- 300: Einrichtung zum Training einer Ballsportart, dritte bevorzugte Ausführungsform
- 302: Bildaufzeichnungsvorrichtung, IR-Kamera
- 304: Bildprojektionsvorrichtung
- 306: Infrarot-Strahler
- 308: Decke
- 310: Einheit
- 312: Träger der Einheit 310
- 314: untere Deckfläche der Einheit 310
- 316: Seitenwandbereiche der Einheit 310
- 318: Aussparungen in den Seitenwandbereiche 316
- 320: obere Deckfläche der Einheit 310
- 322: verschwenkbare Befestigung der IR-Strahler 306
- α: Verschwenkbarkeit gegenüber dem Umfang der Seitenwand 14, horizontale Verdrehbarkeit
- β: Verkippbarkeit gegenüber der Vertikalen

## Patentansprüche

1. Einrichtung (10; 200; 300) zum Training einer Ballsportart durch zumindest einen Spieler (68), wobei die Einrichtung (10; 200; 300) zumindest eine Bildprojektionsvorrichtung (26; 204; 304), zumindest eine Bildaufzeichnungsvorrichtung (28; 206; 302) und zumindest eine Wand (14) aufweist, wobei die Wand (14) angepasst ist, mit zumindest einem Ball (64) bespielt zu werden, die Bildprojektionsvorrichtung (26; 204; 304) angepasst ist, ein oder mehrere Bilder auf die Wand (14) zu projizieren und die Bildaufzeichnungsvorrichtung (28; 206; 302) angepasst ist, ein oder mehrere Positionen des Balles (64) in Bezug auf die projizierten Bilder (66, 102, 108) aufzunehmen, wobei die Einrichtung (300) angepasst ist, zumindest den Ball (64) durch zumindest eine Leuchtquelle (306) mit einer Wellenlänge zu beleuchten, die von der Bildaufzeichnungsvorrichtung (302) erfasst wird, wobei die Bildaufzeichnungsvorrichtung (302) nicht im sichtbaren Wellenlängenbereich arbeitet, **dadurch gekennzeichnet, dass** die Beleuchtung diffus und indirekt ist, wobei die Leuchtquelle (306) an einen planparallel zu einem Boden (24) angeordneten Deckenbereich (308) der Einrichtung (300) strahlt, wobei an dem Deckenbereich (308) eine Reflexion erfolgt, so dass der zu bespielende Raum (22) diffus und homogen mit Infrarotstrahlung beleuchtet wird, wobei die Bildaufzeichnungsvorrichtung (302) oberhalb des Spielers angeordnet ist, wobei sechs Bildprojektionsvorrichtungen (304) bestehen, wobei oberhalb jeder Bildprojektionsvorrichtung (304) eine Leuchtquelle (306) besteht, die senkrecht nach oben an den Deckenbereich (308) strahlt.

2. Einrichtung (300) nach Anspruch 1, **dadurch gekennzeichnet,**
**dass** die Bildaufzeichnungsvorrichtung (302) im infraroten Wellenlängenbereich arbeitet, insbesondere bei 950 nm.

3. Einrichtung (10; 200; 300) nach einem der vorherigen Ansprüche, **dadurch gekennzeichnet,**
**dass** die Einrichtung (10; 200) eine Steuerungseinheit (76) und eine Auswertevorrichtung (50) aufweist, die angepasst sind, die Bildprojektionsvorrichtung (26; 204) zu steuern und durch Auswertung der Bildaufzeichnungsvorrichtung (28; 206) festzustellen, ob von der Bildprojektionsvorrichtung (26; 204) angezeigte Vorgaben durch den Benutzer (68) eingehalten werden und/oder
**dass** der Spieler (68) und/oder der Ball (64) Sensoren (70) aufweisen.

4. Einrichtung (10; 200; 300) nach Anspruch 3, **dadurch gekennzeichnet,**
**dass** die Auswertevorrichtung (50) angepasst ist, die Einrichtung (300) zu veranlassen, eine Meldung darüber auszugeben, ob von der Bildprojektionsvorrichtung angezeigte Vorgaben durch den Spieler eingehalten werden, wobei die Meldung bevorzugt eine optische Meldung ist, wobei insbesondere das projizierte Bild selbst die Meldung anzeigt.

5. Einrichtung (10; 200; 300) nach Anspruch 3 oder 4, **dadurch gekennzeichnet, dass** die Auswertevorrichtung (50) angepasst ist, den Ball (64) und/oder den Spieler (68) und/oder ein oder mehrere Körperteile des Spielers (68) und/oder Ballspielhilfsmittel mithilfe einer Bilderkennung zu erkennen.

6. Einrichtung (10; 200; 300) nach einem der Ansprüche 3 bis 5, **dadurch gekennzeichnet,**
**dass** die Einrichtung (10; 200; 300) ausgebildet ist, die Position des Balles (64) an der Wand (14) und den Zeitpunkt des Treffens der Wand (14) dadurch zu bestimmen, dass die Position des Balles (64) zum Zeitpunkt einer unstetigen Bewegungsänderung der Bahn des Balles (64) bestimmt wird.

7. Einrichtung (10; 200; 300) nach einem der vorherigen Ansprüche, **dadurch gekennzeichnet,**
**dass** die Bildprojektionsvorrichtung einen Videoprojektor(26; 204; 304) umfasst und/oder
**dass** die Bildaufzeichnungsvorrichtung eine Videokammera (28; 206; 302), bevorzugt eine Hochgeschwindigkeitskamera umfasst, die zumindest 30 Bilder pro Sekunde, bevorzugt zumindest 60 Bilder pro Sekunde, insbesondere zumindest 90 Bilder pro Sekunde, vorzugsweise 250 Bilder pro Sekunde aufzeichnen kann.

8. Einrichtung (10; 200; 300) nach einem der vorherigen Ansprüche, **dadurch gekennzeichnet,**
**dass** die Bildprojektionsvorrichtung (26; 204; 304) angepasst ist, Bilder, Szenerien und/oder graphische Elemente (66) auf die Wand (14) zu projizieren, wobei die Bilder, Szenerien und/oder graphische Elemente (66) statisch und/oder beweglich auf der Wand (14) erscheinen können.

9. Einrichtung (10; 200; 300) nach einem der vorherigen Ansprüche, **dadurch gekennzeichnet,**
**dass** die Bildprojektionsvorrichtung (26; 204) gegenüber der Wand (14) ausrichtbar (58, α, β) angeordnet ist, wobei die Ausrichtung (α, β) bevorzugt durch die Steuerungseinheit 76 nach Anspruch 2 gesteuert wird und/oder
**dass** die Bildaufzeichnungsvorrichtung (28; 206; 302) fest mit der Bildprojektionsvorrichtung (26; 204; 304) verbunden ist.

10. Einrichtung (10; 200; 300) nach einem der vorherigen Ansprüche, **dadurch gekennzeichnet,**
**dass** die Wand eine Seitenwand (14) umfasst, die bevorzugt kontinuierlich (in sich geschlossen) ausgebildet ist, wobei die Seitenwand (14) in Bezug auf eine horizontal verlaufenden Bodenfläche (22) insbesondere kreisförmig, elliptisch oder bogenförmig verläuft und/oder
**dass** die Wand (14) gegenüber einer horizontal verlaufenden Bodenfläche (22) vertikal ausgerichtet ist.

11. Einrichtung (10; 200; 300) nach Anspruch 10, **dadurch gekennzeichnet,**
**dass** die Seitenwand (14) eine Höhe von zumindest 2 m, bevorzugt von zumindest 2,5 m und insbesondere von zumindest 3 m aufweist und/oder **dass** die Seitenwand (14) eine Länge von zumindest 15 m, bevorzugt von zumindest 30 m, insbesondere von zumindest 60 m aufweist.

12. Einrichtung (10; 200; 300) nach einem der vorherigen Ansprüche, **dadurch gekennzeichnet,**
**dass** die Wand (14) Oberflächenunebenheiten (40) aufweist, wobei die Wand (14) bevorzugt aneinanderstoßende Platten (16, 16a, 16b) aufweist, wobei die Unebenheiten durch die Stöße (40) gebildet sind.

13. Verfahren zum Training einer Ballsportart durch zumindest einen Spieler (68), wobei Trainingsinhalte auf eine mit einem Ball (64) bespielbare Wand (14) projiziert werden, der Spieler (68) das Training absolviert und zugleich mit der Projektion ein oder mehrere Positionen des Balles (64) in Bezug auf die projizierten Trainingsinhalte (66, 102, 108) aufgenommen werden, wobei die Einrichtung (300) zumindest den Ball (64) durch zumindest eine Leuchtquelle (306) mit einer Wellenlänge beleuchtet, die von der Bildaufzeichnungsvorrichtung (302) erfasst wird, wobei die Bildaufzeichnungsvorrichtung (302) nicht im sichtbaren Wellenlängenbereich arbeitet, **dadurch gekennzeichnet, dass** die Beleuchtung diffus und indirekt erfolgt, wobei die Leuchtquelle (306) an einen planparallel zu einem Boden (24) angeordneten Deckenbereich (308) der Einrichtung (300) strahlt, wobei an dem Deckenbereich (308) eine Reflexion erfolgt, so dass der zu bespielende Raum (22) diffus und homogen mit Infrarotstrahlung beleuchtet wird, wobei die Bildaufzeichnungsvorrichtung (302) oberhalb des Spielers angeordnet ist, wobei sechs Bildprojektionsvorrichtungen (304) bestehen, wobei oberhalb jeder Bildprojektionsvorrichtung (304) eine Leuchtquelle (306) besteht, die senkrecht nach oben an den Deckenbereich (308) strahlt.

14. Verfahren nach Anspruch 13, **dadurch gekennzeichnet,**
**dass** eine Auswertung vorgenommen wird, ob und/oder wie projizierte Trainingsinhalte vom Spieler (68) erfüllt werden und/oder
**dass** eine Einrichtung (10; 200; 300) nach einem der Ansprüche 1 bis 12 verwendet wird.

## Claims

1. Means (10; 200; 300) for training for a type of ball sport by at least one player (68), wherein the means (10; 200; 300) has at least one image projection device (26; 204; 304), at least one image recording device (28; 206; 302) and at least one wall (14), wherein the wall (14) is adapted to be played against with at least one ball (64), the image projection device (26; 204; 304) is adapted to project one or more images onto the wall (14) and the image recording device (28; 206; 302) is adapted to record one or more positions of the ball (64) in relation to the projected images (66, 102, 108), wherein the means (300) is adapted to illuminate at least the ball (64) by at least one light source (306) having a wavelength which is detected by the image recording device (302), wherein the image recording device (302) does not operate in the visible wavelength range, **characterised in that** the illumination is diffuse and indirect, the light source (306) beaming onto a ceiling region (308) of the means (300) which is arranged plane-parallel to a floor (24), with reflection taking place on the ceiling region (308) so that the space (22) to be played in is illuminated diffusely and homogeneously with infrared radiation, the image recording device (302) being arranged above the player, with six image projection devices (304) being present, with a light source (306) being present above each image projection device (304), which light source beams perpendicularly upwards onto the ceiling region (308).

2. Means (300) according to claim 1,
**characterised in that**
the image recording device (302) operates in the infrared wavelength range, in particular at 950 nm.

3. Means (10; 200; 300) according to one of the preceding claims, **characterised in that**
the means (10; 200) has a control unit (76) and an evaluation device (50) which are adapted to control the image projection device (26; 204) and by evaluating the image recording device (28; 206) to ascertain whether specifications displayed by the image projection device (26; 204) are complied with by the user (68), and/or
**in that** the player (68) and/or the ball (64) have sensors (70).

4. Means (10; 200; 300) according to claim 3,
**characterised in that**
the evaluation device (50) is adapted to cause the means (300) to emit a notification as to whether specifications displayed by the image projection device are complied with by the player, the notification preferably being a visual notification, with in particular the projected image itself displaying the notification.

5. Means (10; 200; 300) according to claim 3 or 4,
**characterised in that**
the evaluation device (50) is adapted to recognise the ball (64) and/or the player (68) and/or one or more body parts of the player (68) and/or ball game aids with the aid of image recognition.

6. Means (10; 200; 300) according to one of claims 3 to 5,
**characterised in that**
the means (10; 200; 300) is configured to determine the position of the ball (64) on the wall (14) and the time that the wall (14) is hit, by determining the position of the ball (64) at the time of a discontinuous change in movement of the path of the ball (64).

7. Means (10; 200; 300) according to one of the preceding claims, **characterised in that**
the image projection device comprises a video projector (26; 204; 304), and/or **in that** the image recording device comprises a video camera (28; 206; 302), preferably a high-speed camera, which can record at least 30 images per second, preferably at least 60 images per second, in particular at least 90 images per second, preferably 250 images per second.

8. Means (10; 200; 300) according to one of the preceding claims, **characterised in that**
the image projection device (26; 204; 304) is adapted to project images, scenes and/or graphic elements (66) onto the wall (14), the images, scenes and/or graphic elements (66) being able to appear on the wall (14) in a static and/or moving manner.

9. Means (10; 200; 300) according to one of the preceding claims, **characterised in that**
the image projection device (26; 204) is arranged so that it can be oriented (58, α, β) relative to the wall (14), the orientation (α, β) preferably being controlled by the control unit (76) according to claim 2, and/or
**in that** the image recording device (28; 206; 302) is connected fixedly to the image projection device (26; 204; 304).

10. Means (10; 200; 300) according to one of the preceding claims, **characterised in that**
the wall comprises a side wall (14) which is configured preferably continuously (in a closed loop), the side wall (14) having in particular a circular, elliptical or arcuate course in relation to a horizontally running base surface (22), and/or **in that** the wall (14) is vertically oriented relative to a horizontally running base surface (22).

11. Means (10; 200; 300) according to claim 10,
**characterised in that** the side wall (14) has a height of at least 2 m, preferably of at least 2.5 m and in particular of at least 3 m, and/or
**in that** the side wall (14) has a length of at least 15 m, preferably of at least 30 m, in particular of at least 60 m.

12. Means (10; 200; 300) according to one of the preceding claims, **characterised in that** the wall (14) has surface irregularities (40), the wall (14) preferably having abutting panels (16, 16a, 16b), the irregularities being formed by the butt joints (40).

13. Method for training for a type of ball sport by at least one player (68), wherein training content is projected onto a wall (14) which can be played against with a ball (64), the player (68) completes the training and simultaneously with the projection one or more positions of the ball (64) in relation to the projected training content (66, 102, 108) is/are recorded, wherein the means (300) illuminates at least the ball (64) by at least one light source (306) having a wavelength which is detected by the image recording device (302), wherein the image recording device (302) does not operate in the visible wavelength range, **characterised in that** the illumination takes place diffusely and indirectly, the light source (306) beaming onto a ceiling region (308) of the means (300) which is arranged plane-parallel to a floor (24), with reflection taking place on the ceiling region (308) so that the space (22) to be played in is illuminated diffusely and homogeneously with infrared radiation, the image recording device (302) being arranged above the player, with six image projection devices (304) being present, with a light source (306) being present above each image projection device (304), which light source beams perpendicularly upwards onto the ceiling region (308).

14. Method according to claim 13,
**characterised in that**
an evaluation is performed as to whether and/or how projected training content is fulfilled by the player (68), and/or
**in that** a means (10; 200; 300) according to one of claims 1 to 12 is used.

## Revendications

1. Système (10 ; 200 ; 300) pour l'entraînement d'au moins un joueur (68) à un type de sport de balle, dans lequel le système (10 ; 200 ; 300) présente au moins un dispositif de projection d'images (26 ; 204 ; 304), au moins un dispositif d'enregistrement d'images (28 ; 206 ; 302) et au moins un mur (14), dans lequel le mur (14) est adapté pour être pratiqué avec au moins une balle (64), le dispositif de projection d'images (26 ; 204 ; 304) est adapté pour projeter une ou plusieurs images sur le mur (14) et le dispositif d'enregistrement d'images (28 ; 206 ; 302) est adapté pour enregistrer une ou plusieurs positions de la balle (64) par rapport aux images (66, 102, 108) projetées, dans lequel le système (300) est adapté pour éclairer au moins la balle (64) par au moins une source d'éclairage (306) avec une longueur d'onde qui est détectée par le dispositif d'enregistrement d'images (302), dans lequel le dispositif d'enregistrement d'images (302) ne fonctionne pas dans la plage de longueurs d'onde visibles, **caractérisé en ce que** l'éclairage est diffus et indirect, dans lequel la source d'éclairage (306) émet un rayonnement sur une zone de plafond (308), disposée de manière parallèle en plan par rapport à un sol (24), du système (300), dans lequel une réflexion a lieu sur la zone de plafond (308) de telle sorte que l'espace (22) à pratiquer est éclairé de manière diffuse et homogène avec un rayonnement infrarouge, dans lequel le dispositif d'enregistrement d'images (302) est disposé au-dessus du joueur, dans lequel six dispositifs de projection d'images (304) sont présents, dans lequel une source d'éclairage qui émet un rayonnement de manière verticale vers le haut sur la zone de plafond (308) est présente au-dessus de chaque dispositif de projection d'images (304).

2. Système (300) selon la revendication 1,
**caractérisé en ce que**
le dispositif d'enregistrement d'images (302) fonctionne dans la plage de longueurs d'onde infrarouges, en particulier de l'ordre de 950 nm.

3. Système (10 ; 200 ; 300) selon l'une quelconque des revendications précédentes,
**caractérisé en ce que**
le système (10 ; 200) présente une unité de commande (76) et un dispositif d'évaluation (50), qui sont adaptés pour commander le dispositif de projection d'images (26 ; 204) et pour constater en évaluant le dispositif d'enregistrement d'images (28 ; 206) si des spécifications affichées par le dispositif de projection d'images (26 ; 204) sont respectées par l'utilisateur (68) et/ou que le joueur (68) et/ou la balle (64) présentent des capteurs (70).

4. Système (10 ; 200 ; 300) selon la revendication 3,
**caractérisé en ce que**
le dispositif d'évaluation (50) est adapté pour déclencher l'émission par le système (300) d'une notification sur le respect ou non par le joueur des spécifications affichées par le dispositif de projection d'images, dans lequel la notification est de manière préférée une notification optique, dans lequel en particulier l'image projetée elle-même affiche la notification.

5. Système (10 ; 200 ; 300) selon la revendication 3 ou 4,
**caractérisé en ce que**
le dispositif d'évaluation (50) est adapté pour identifier à l'aide d'une identification d'images la balle (64) et/ou le joueur (68) et/ou une ou plusieurs parties corporelles du joueur (68) et/ou des moyens auxiliaires de jeu de balle.

6. Système (10 ; 200 ; 300) selon l'une quelconque des revendications 3 à 5, **caractérisé en ce que**
le système (10 ; 200 ; 300) est réalisé pour définir la position de la balle (64) sur le mur (14) et le moment du contact avec le mur (14) **en ce que** la position de la balle (64) est définie au moment d'une modification intermittente de la trajectoire de déplacement de la balle (64).

7. Système (10 ; 200 ; 300) selon l'une quelconque des revendications précédentes,
**caractérisé en ce que**
le dispositif de projection d'images comprend un projecteur vidéo (26 ; 204 ; 304) et/ou
**que** le dispositif d'enregistrement d'images comprend une caméra vidéo (28 ; 206 ; 302), de manière préférée une caméra à vitesse élevée, qui peut enregistrer au moins 30 images par seconde, de manière préférée au moins 60 images par seconde, en particulier au moins 90 images par seconde, de préférence 250 images par seconde.

8. Système (10 ; 200 ; 300) selon l'une quelconque des revendications précédentes,
**caractérisé en ce que**
le dispositif de projection d'images (26 ; 204 ; 304) est adapté pour projeter des images, des scénarii et/ou des éléments graphiques (66) sur le mur (14), dans lequel les images, les scénarii et/ou des éléments graphiques (66) peuvent apparaître de manière statique et/ou de manière mobile sur le mur (14).

9. Système (10 ; 200 ; 300) selon l'une quelconque des revendications précédentes,
**caractérisé en ce que**
le dispositif de projection d'images (26 ; 204) est disposé de manière à pouvoir être orienté (58, α, β) par rapport au mur (14), dans lequel l'orientation (α, β) est commandée de manière préférée par l'unité de commande (76) selon la revendication 2, et/ou
**que** le dispositif d'enregistrement d'images (28 ; 206 ; 302) est relié de manière solidaire au dispositif de projection d'images (26 ; 204 ; 304).

10. Système (10 ; 200 ; 300) selon l'une quelconque des revendications précédentes,
**caractérisé en ce que**
le mur comprend un mur latéral (14), qui est réalisé de manière préférée en continu (de manière fermée sur lui), dans lequel le mur latéral (14) s'étend en particulier de manière circulaire, de manière elliptique ou de manière arquée par rapport à une surface de sol (22) s'étendant de manière horizontale, et/ou **que** le mur (14) est orienté de manière verticale par rapport à une surface de sol (22) s'étendant de manière horizontale.

11. Système (10 ; 200 ; 300) selon la revendication 10,
**caractérisé en ce que**
le mur latéral (14) présente une hauteur d'au moins 2 m, de manière préférée d'au moins 2,5 m et en particulier d'au moins 3 m, et/ou **que** la paroi latérale (14) présente une longueur d'au moins 15 m, de manière préférée d'au moins 30 m, en particulier d'au moins 60 m.

12. Système (10 ; 200 ; 300) selon l'une quelconque des revendications précédentes,
**caractérisé en ce que**
le mur (14) présente des irrégularités de surface (40), dans lequel le mur (14) présente de manière préférée des plaques (16, 16a, 16b) accolées les unes aux autres, dans lequel les irrégularités sont formées par les chocs (40).

13. Procédé pour l'entraînement d'au moins un joueur (68) à un type de sport de balle, dans lequel des contenus d'entraînement sont projetés sur un mur (14) praticable avec une balle (64), le joueur (68) réalise l'entraînement et, dans le même temps que la projection, une ou plusieurs positions de la balle (64) par rapport aux contenus d'entraînement (66, 102, 108) projetés sont enregistrées, dans lequel le système (300) éclaire au moins la balle (64) par au moins une source d'éclairage (306) avec une longueur d'onde qui est détectée par le dispositif d'enregistrement d'images (302), dans lequel le dispositif d'enregistrement d'images (302) ne fonctionne pas dans la plage de longueurs d'onde visibles, **caractérisé en ce que** l'éclairage a lieu de manière diffuse et indirecte, dans lequel la source d'éclairage (306) émet un rayonnement sur une zone de plafond (308), disposée de manière parallèle en plan par rapport à un sol (24), du système (300), dans lequel une réflexion a lieu sur la zone de plafond (308) de telle sorte que l'espace (22) à pratiquer est éclairé avec le rayonnement infrarouge de manière diffuse et homogène, dans lequel le dispositif d'enregistrement d'images (302) est disposé au-dessus du joueur, dans lequel six dispositifs de projection d'images (304) sont présents, dans lequel une source d'éclairage (306) qui émet un rayonnement de manière verticale vers le haut sur la zone de plafond (308) est présente au-dessus de chaque dispositif de projection d'images (304).

14. Procédé selon la revendication 13,
**caractérisé en ce**
**qu'**une évaluation est effectuée pour savoir si et/ou comment des contenus d'entraînement projetés sont satisfaits par le joueur (68), et/ou qu'un système (10 ; 200 ; 300) selon l'une quelconque des revendications 1 à 12 est utilisé.
